(19) Europäisches Patentamt / European Patent Office / Office européen des brevets

(11) **EP 4 744 888 A1**

(12) **EUROPEAN PATENT APPLICATION**
published in accordance with Art. 153(4) EPC

(43) Date of publication:
20.05.2026 Bulletin 2026/21

(21) Application number: 24853871.2

(22) Date of filing: 16.08.2024

(51) International Patent Classification (IPC):
*B32B 17/10* (2006.01)    *B32B 27/30* (2006.01)
*B32B 27/36* (2006.01)    *B32B 33/00* (2006.01)
*B60J 7/00* (2006.01)    *C03C 17/245* (2006.01)
*C03C 17/34* (2006.01)    *C03C 17/36* (2006.01)

(52) Cooperative Patent Classification (CPC):
B32B 17/10; B32B 27/30; B32B 27/36;
B32B 33/00; B60J 7/00; C03C 17/245;
C03C 17/34; C03C 17/36

(86) International application number:
PCT/CN2024/112566

(87) International publication number:
WO 2025/036465 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.08.2023 CN 202311037786

(71) Applicant: Fuyao Glass Industry Group Co., Ltd.
Fuqing, Fujian 350300 (CN)

(72) Inventor: TONG, Zhiqiang
Fuzhou, Fujian 350300 (CN)

(74) Representative: Mewburn Ellis LLP
Aurora Building
Counterslip
Bristol BS1 6BX (GB)

(54) **LAMINATED GLASS AND VEHICLE**

(57) A laminated glass and a vehicle are provided in the present disclosure. The laminated glass includes an outer glass plate, an inner glass plate, a thermoplastic interlayer disposed between the outer glass plate and the inner glass plate, and a low-emissivity coating disposed on a surface of the inner glass plate facing away the outer glass plate. A visible light transmittance of the laminated glass ranges from 1% to 25%. A chromaticity difference of the laminated glass ranges from 2 to 18. A visual index ranges from 0.5 to 2.5. The laminated glass provided in the present disclosure achieves a small chromaticity difference between colors observed from inside and outside while maintaining low visible light transmittance and low-emissivity property, thus having advantages of color consistency between inside and outside, great visual-comfort, and the like.

<u>10</u>

FIG. 3

EP 4 744 888 A1

**Description**

CROSS-REFERENCE TO RELATED APPLICATION(S)

This application claims priority to Chinese Patent Application No. 202311037786. X, filed with the Chinese national intellectual property administration on August 17, 2023, and entitled "LAMINATED GLASS AND VEHICLE", the entire disclosure of which is hereby incorporated by reference.

TECHNICAL FIELD

This disclosure relates to the field of vehicle glass, and in particular, to a laminated glass and a vehicle.

BACKGROUND

An interior space of a vehicle becomes extremely hot in summer due to a high-temperature environment and strong direct sunlight, and becomes extremely cold in winter due to heat loss inside the vehicle caused by a low external temperature. More and more vehicles are using a sunroof glass coated with a coating having a low-emissivity property on a surface close to the interior space of the vehicle, so as to achieve a "warm in winter and cool in summer" effect inside the vehicle. In summer, a low-emissivity coating can reduce an amount of long-wave thermal radiation emitted from the heated sunroof glass into the interior space of the vehicle, thereby preventing heat from entering the interior space of the vehicle. In winter, the low-emissivity coating can reduce radiation of heat from the interior space of the vehicle to the external environment, thereby preventing heat loss from the interior space of the vehicle.

With the increasing size of sunroof glass and the growing requirement for thermal comfort inside the vehicle from passengers, applying a low-emissivity coating on a surface of a sunroof glass, and even on a surface of a side window glass, facing towards an inner side of the vehicle, has increasingly become a mainstream configuration. Moreover, higher requirements for thermal comfort inside the vehicle are raised to some sunroof glasses and side window glasses, therefore, infrared reflection coatings are also disposed in the sunroof glasses or the side window glasses.

However, disposing low-emissivity coating and infrared reflection coating increases a difference between a transmitted color and a reflected color of the sunroof glass and of the side window glass. When people inside the vehicle and people outside the vehicle observe the same vehicle glass, a significant color difference appears, resulting in color inconsistency between inside and outside, and drawbacks such as poor aesthetics and visual fatigue easily caused by some products.

SUMMARY

In a first aspect, a laminated glass is provided in the present disclosure. The laminated glass includes an outer glass plate, an inner glass plate, a thermoplastic interlayer disposed between the outer glass plate and the inner glass plate, and a low-emissivity coating disposed on a surface of the inner glass plate facing away the outer glass plate. A visible light transmittance of the laminated glass ranges from 1% to 25%, a chromaticity difference of the laminated glass ranges from 2 to 18, and a visual index ranges from 0.5 to 2.5.

A visible light reflectivity of the laminated glass at a side where the low-emissivity coating is located is less than or equal to 6%.

An emissivity of the laminated glass at a side where the low-emissivity coating is located is less than or equal to 0.3, or less than or equal to 0.25, or less than or equal to 0.2.

The low-emissivity coating includes at least one transparent conductive oxide coating. A material of the at least one transparent conductive oxide coating is selected from a group consisting of doped zinc oxide (ZnO), indium tin oxide (ITO), chromium-doped nickel oxide, fluorine-doped tin oxide (FTO), zinc tin oxide (ZnSnOx), and combinations thereof. Doped ZnO is ZnO doped with at least one of aluminum (Al), tungsten (W), hafnium (Hf), gallium (Ga), yttrium (Y), niobium (Nb), and neodymium (Nd).

A total thickness of all transparent conductive oxide coatings ranges from 50 nm to 300 nm.

The low-emissivity coating further includes at least two first dielectric layers. Each transparent conductive oxide coating is disposed between two adjacent first dielectric layers. A material of the at least two first dielectric layers is selected from a group consisting of a nitride, an oxide, and an oxynitride of at least one of zinc (Zn), tin (Sn), titanium (Ti), silicon (Si), Al, magnesium (Mg), and zirconium (Zr).

The laminated glass further includes an infrared reflection coating. The infrared reflection coating is disposed on a surface of the outer glass plate facing towards the inner glass plate, or on a surface of the inner glass plate facing towards the outer glass plate, or at the thermoplastic interlayer.

The infrared reflection coating further includes at least one metal layer and at least two second dielectric layers.

Each metal layer is disposed between two adjacent second dielectric layers. A material of the at least one metal layer is selected from a group consisting of silver (Ag), aurum (Au), copper (Cu), aluminum (Al), platinum (Pt), and alloys thereof. A thickness of each metal layer ranges from 4 nm to 20 nm. A material of the at least two second dielectric layers is selected from a group consisting of oxides of zinc (Zn), magnesium (Mg), tin (Sn), titanium (Ti), niobium (Nb), zirconium (Zr), nickel (Ni), indium (In), Al, cerium (Ce), tungsten (W), molybdenum (Mo), antimony (Sb), and bismuth (Bi), or includes at least one material selected from a group consisting of nitrides, oxynitrides, and mixtures thereof of silicon (Si), Al, zirconium (Zr), yttrium (Y), Ce, and lanthanum (La).

The low-emissivity coating further includes a visible light blocking layer. And/or, when the laminated glass further includes the infrared reflection coating, the infrared reflection coating further includes the visible light blocking layer. A material of the visible light blocking layer is selected from a group consisting of nickel-chromium alloy (NiCr), nickel-aluminum alloy (NiAl), nickel-silicon alloy (NiSi), metallic chromium (Cr), titanium nitride (TiN), niobium nitride (NbN), titanium-molybdenum alloy (MoTi), and combinations thereof. A thickness of the visible light blocking layer ranges from 3 nm to 20 nm.

The thermoplastic interlayer is a transparent thermoplastic polymer film or a tinted thermoplastic polymer film. A visible light transmittance of the transparent thermoplastic polymer film is greater than or equal to 80%, and a visible light transmittance of the tinted thermoplastic polymer film ranges from 1% to 45%.

The inner glass plate is a clear glass or a tinted glass. A thickness of the inner glass plate ranges from 0.7 mm to 2.1 mm, and a visible light transmittance of the inner glass plate ranges from 25% to 95%.

The outer glass plate is a tinted glass, and a visible light transmittance of the outer glass plate ranges from 10% to 85%.

The outer glass plate is a clear glass or an ultra-clear glass. A total iron content of the clear glass is less than or equal to 0.1%, and a total iron content of the ultra-clear glass is less than or equal to 0.015%. A visible light transmittance of the outer glass plate ranges from 80% to 95%.

The visible light transmittance of the laminated glass ranges from 1% to 8%, the chromaticity difference of the laminated glass ranges from 2 to 15, and the visual index ranges from 0.8 to 2.5.

The visible light transmittance of the laminated glass ranges from 8% to 25%, the chromaticity difference of the laminated glass ranges from 6 to 10, and the visual index ranges from 0.5 to 0.9.

The visible light transmittance of the laminated glass ranges from 1% to 8%, the chromaticity difference of the laminated glass ranges from 6 to 18, and the visual index ranges from 0.8 to 2.5.

The laminated glass provided in the present disclosure is configured through a combination of the outer glass plate, the thermoplastic interlayer, the inner glass plate, and the low-emissivity coating, so that the visible light transmittance of the laminated glass ranges from 1% to 25%, the chromaticity difference of the laminated glass ranges from 2 to 18, and the visual index ranges from 0.5 to 2.5. When the laminated glass is mounted on a vehicle, a chromaticity difference between colors of the laminated glass observed from outside and inside the vehicle, is relatively small. Therefore, the laminated glass provided in the present disclosure achieves a small chromaticity difference between colors observed from inside and outside while maintaining low visible light transmittance and low-emissivity property, thus having advantages of color consistency between inside and outside, great visual-comfort, and the like.

In a second aspect, a vehicle is further provided in the present disclosure. The vehicle includes a vehicle body and the laminated glass of the first aspect. The laminated glass is mounted on the vehicle body.

The vehicle in the present disclosure is provided with the laminated glass, so that the visible light transmittance at the laminated glass ranges from 1% to 25%, and the chromaticity difference between colors of the laminated glass observed from inside and outside the vehicle is relatively small. Therefore, the vehicle achieves color consistency, observed from inside and outside, at the laminated glass, improving aesthetics and visual comfort of the vehicle at the laminated glass, and further enhancing an overall appearance comfort and a sense of premium quality of the vehicle.

BRIEF DESCRIPTION OF THE DRAWINGS

In order to describe technical solutions in embodiments of the present disclosure more clearly, the following briefly introduces the accompanying drawings required for describing the embodiments. Obviously, the accompanying drawings hereinafter described merely illustrates some embodiments of the present disclosure, and those of ordinary skill in the art may still derive other drawings from these accompanying drawings without creative efforts.

FIG. 1 is a schematic structural diagram of a vehicle provided in an embodiment of the present disclosure.
FIG. 2 is a schematic structural diagram of a vehicle provided in another embodiment of the present disclosure.
FIG. 3 is a schematic structural diagram of a laminated glass provided in an embodiment of the present disclosure.
FIG. 4 is a first schematic structural diagram of a low-emissivity coating illustrated in FIG. 3.
FIG. 5 is a second schematic structural diagram of a low-emissivity coating illustrated in FIG. 3.
FIG. 6 is a schematic structural diagram of a laminated glass provided in another embodiment of the present disclosure.

FIG. 7 is a schematic structural diagram of an infrared reflection coating illustrated in FIG. 6.

Reference signs of the accompanying drawings: vehicle - 1; laminated glass - 10; outer glass plate - 11; inner glass plate - 12; thermoplastic interlayer - 13; low-emissivity coating - 14; transparent conductive oxide coating - 141; first dielectric layer - 142; visible light blocking layer - 143; infrared reflection coating - 15; metal layer - 151; second dielectric layer - 152; vehicle body - 20.

DETAILED DESCRIPTION

The following will clearly and completely describe technical solutions in embodiments of the present disclosure with reference to the accompanying drawings in embodiments of the present application. Obviously, embodiments described herein are merely some embodiments, rather than all embodiments, of the present disclosure. All other embodiments obtained by those of ordinary skill in the art based on the embodiments of the present disclosure without creative efforts shall be covered within the protection scope of the present disclosure.

The terms "first", "second", and the like in the specification and claims of the present disclosure and the accompanying drawings are used for distinguishing different objects, rather than for describing a specific order. Furthermore, the terms "include" and "have" and any variations thereof are intended to cover non-exclusive inclusions. For example, a process, method, system, product or apparatus that includes a series of steps or units, is not limited to the listed steps or units, but optionally further includes the steps or units not listed, or optionally further includes other steps or units inherent to the process, method, product or apparatus.

The term "embodiment" or "implementation" referred to herein means that a particular feature, structure, or feature described in conjunction with the embodiment or implementation may be contained in at least one embodiment of the present disclosure. The appearance of these phrases in various places in the specification does not necessarily referring to the same embodiment, nor does it refer to an independent or alternative embodiment that is mutually exclusive with other embodiments. It is explicitly and implicitly understood by those of ordinary skill in the art that the embodiments described herein may be combined with other embodiments.

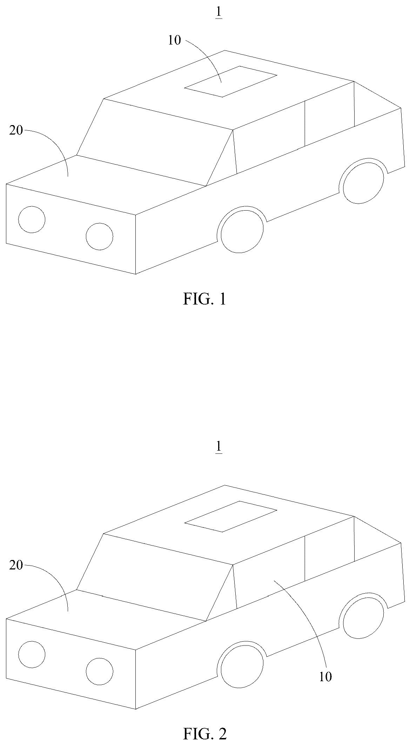

A vehicle 1 is provided in the present disclosure. Reference can be made to FIG. 1 and FIG. 2. FIG. 1 is a schematic structural diagram of a vehicle provided in an embodiment of the present disclosure. FIG. 2 is a schematic structural diagram of a vehicle provided in another embodiment of the present disclosure. In this embodiment, the vehicle 1 includes a vehicle body 20 and a laminated glass 10. The laminated glass 10 is mounted on the vehicle body 20.

In this embodiment, the vehicle 1 may be, but is not limited to, a car, a multi-purpose automobile (MPV), a sport/suburban utility vehicle (SUV), an off-road automobile (ORV), a pickup automobile, a minivan, a passenger car, a cargo truck, and the like.

In this embodiment, the laminated glass 10 is mounted on the vehicle body 20 as a sunroof glass (reference can be made to FIG. 1), and/or, the laminated glass 10 is mounted on the vehicle body 20 as a side window glass (reference can be made to FIG. 2), and the like.

The vehicle 1 in the present disclosure is provided with the laminated glass 10, so that a visible light transmittance at the laminated glass 10 ranges from 1% to 25%, and a chromaticity difference between colors of the laminated glass 10 observed from inside and outside the vehicle 1 is relatively small. Therefore, the vehicle 1 achieves color consistency, observed from inside and outside, at the laminated glass 10, improving aesthetics and visual comfort of the vehicle 1 at the laminated glass 10, and further enhancing an overall appearance comfort and a sense of premium quality of the vehicle 1.

The laminated glass 10 in the vehicle 1 provided in the present disclosure will be introduced in detail in the following.

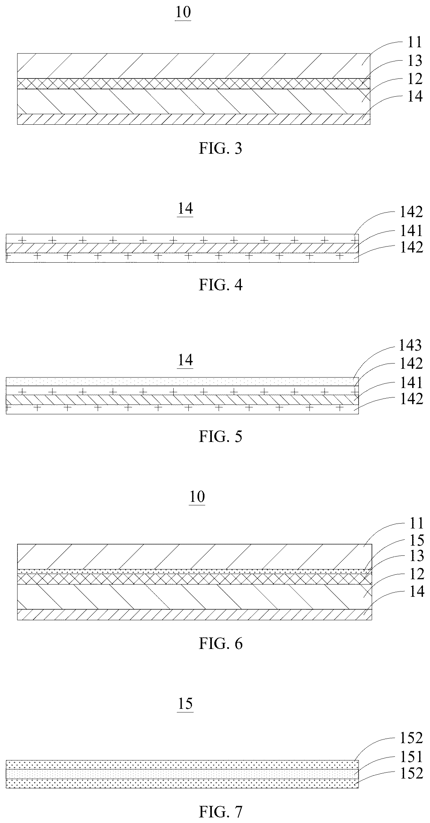

Reference can be made to FIG. 3, where FIG. 3 is a schematic structural diagram of a laminated glass provided in an embodiment of the present disclosure. In this embodiment, the laminated glass 10 includes an outer glass plate 11, an inner glass plate 12, a thermoplastic interlayer 13, and a low-emissivity coating 14. The thermoplastic interlayer 13 is disposed between the outer glass plate 11 and the inner glass plate 12. The low-emissivity coating 14 is disposed on a surface of the inner glass plate 12 facing away the outer glass plate 11. The visible light transmittance of the laminated glass 10 ranges from 1% to 25%, a chromaticity difference of the laminated glass 10 is 2 to 18, and a visual index is 0.5 to 2.5.

In this embodiment, the laminated glass 10 is applied to the vehicle 1. The outer glass plate 11 is located on an outer side of the vehicle 1. The outer glass plate 11 has an outer surface facing away the thermoplastic interlayer 13 and an inner surface facing towards the thermoplastic interlayer 13. The inner glass plate 12 is located on an inner side of the vehicle 1. The inner glass plate 12 has an outer surface facing away the thermoplastic interlayer 13 and an inner surface facing towards the thermoplastic interlayer 13. The low-emissivity coating 14 is disposed on the outer surface of the inner glass plate 12, that is, the low-emissivity coating 14 is exposed to an interior space of the vehicle for use. Therefore, an emissivity of the laminated glass 10 at one side of the laminated glass 10 where the low-emissivity coating 14 is located is reduced to be less than or equal to 0.3.

In this embodiment, by providing a combination of the outer glass plate 11, the thermoplastic interlayer 13, the inner glass plate 12, and the low-emissivity coating 14, the visible light transmittance of the laminated glass 10 ranges from 1% to 25%, the chromaticity difference of the laminated glass 10 ranges from 2 to 18, and the visual index ranges from 0.5 to 2.5. When the laminated glass is mounted on the vehicle 1, the chromaticity difference between colors of the laminated glass 10 observed from outside and inside the vehicle 1 is relatively small. For example, the visible light transmittance of the laminated glass 10 may be, but is not limited to, 1%, 1.5%, 2%, 3%, 4%, 7%, 10%, 13%, 16%, 19%, 22%, 25%, or any other value between 1% and 25%. The chromaticity difference of the laminated glass 10 may be, but is not limited to, 2, 4, 6, 8, 10, 12, 14, 16, 18, or any other value between 2 and 18. The visual index of the laminated glass 10 may be, but is not limited to, 0.5, 0.8, 1.1, 1.4, 1.7, 2.0, 2.2, 2.5, or any other value between 0.5 and 2.5.

Furthermore, a visible light reflectivity of the laminated glass 10 at a side where the low-emissivity coating 14 is located is less than or equal to 6%, thereby solving a problem of severe specular reflection inside the vehicle caused by different luminance on both sides of the laminated glass 10, and further reducing or even eliminating the formation of reflection inside the vehicle. In the present disclosure, the visible light transmittance of the laminated glass 10 ranges from 1% to 25%. In order to solve the problem of specular reflection inside the vehicle, the lower the visible light transmittance of the laminated glass 10, the lower the visible light reflectivity of the laminated glass 10 at the side where the low-emissivity coating 14 is located is needed to be designed. Preferably, the visible light reflectivity of the laminated glass 10 at the side where the low-emissivity coating 14 is located is less than or equal to 4%, even less than or equal to 2%, and even less than or equal to 1%.

In some embodiments, the outer glass plate 11 is a tinted glass. The thickness of the outer glass plate 11 ranges from 1.6 mm to 4 mm. A visible light transmittance of the outer glass plate 11 ranges from 10% to 85%. For example, the outer glass plate 11 may be, but is not limited to, a green glass, a gray glass, or the like. The thickness of the outer glass plate 11 may be, but is not limited to, 1.6 mm, 2.0 mm, 2.4 mm, 2.8 mm, 3.2 mm, 3.6 mm, 4.0 mm, or any other value between 1.6 mm and 4 mm. The visible light transmittance of the outer glass plate 11 may be, but is not limited to, 10%, 20%, 30%, 40%, 50%, 60%, 70%, 80%, 85%, or any other value between 10% and 85%. Specifically, the outer glass plate 11 may be, but is not limited to, a 1.6 mm-thick green glass with a visible light transmittance of 83%, a 2.1 mm-thick green glass with a visible light transmittance of 80%, a 1.6 mm-thick gray glass with a visible light transmittance of 45%, a 2.1 mm-thick gray glass with a visible light transmittance of 28%, or the like.

In some embodiments, the thermoplastic interlayer 13 is a transparent thermoplastic polymer film or a tinted thermoplastic polymer film. The thickness of the thermoplastic interlayer 13 ranges from 0.38 mm to 1.52 mm. For example, the thickness of the thermoplastic interlayer 13 may be, but is not limited to, 0.38 mm, 0.76 mm, 0.85 mm, 0.96 mm, 1.28 mm, 1.52 mm, or any other value between 0.38 mm and 1.52 mm.

A material of the thermoplastic polymer film may be selected from a group consisting of polyvinyl butyral (PVB), polyurethane (PU), ethylene-vinyl acetate copolymer (EVA), ionic polymer (SGP), and combinations thereof. When the thermoplastic interlayer 13 is the transparent thermoplastic polymer film, the visible light transmittance of the transparent thermoplastic polymer film is greater than or equal to 80%. For example, the visible light transmittance of the thermoplastic interlayer 13 may be, but is not limited to, 80%, 85%, 90%, or 95%. When the thermoplastic interlayer 13 is the tinted thermoplastic polymer film, the visible light transmittance of the tinted thermoplastic polymer film ranges from 1% to 45%. For example, the visible light transmittance of the thermoplastic interlayer 13 may be, but is not limited to, 1%, 7%, 12%, 18%, 24%, 29%, 35%, 40%, 42%, 45%, or any other value between 1% and 45%. The tinted thermoplastic polymer film may be selected from a gray thermoplastic polymer film, a green thermoplastic polymer film, and a blue thermoplastic polymer film. Specifically, the thermoplastic interlayer 13 may be, but is not limited to, a 0.76 mm-thick transparent PVB with a visible light transmittance of 88%, a 0.76 mm-thick gray PVB with a visible light transmittance of 2%, a 0.76 mm-thick gray PVB with a visible light transmittance of 6%, a 0.76 mm-thick gray PVB with a visible light transmittance of 8%, a 0.76 mm-thick gray PVB with a visible light transmittance of 18%, a 0.76 mm-thick gray PVB with a visible light transmittance of 44%, or the like.

In some embodiments, the inner glass plate 12 is a clear glass or a tinted glass. The thickness of the inner glass plate 12 ranges from 0.7 mm to 2.1 mm. A visible light transmittance of the inner glass plate 12 ranges from 25% to 95%. For example, when the inner glass plate 12 is the tinted glass, the inner glass plate 12 may be the green glass, the gray glass, or the like. The thickness of the inner glass plate 12 may be, but is not limited to, 0.7 mm, 1.0 mm, 1.3 mm, 1.6 mm, 1.9 mm, 2.1 mm, or any other value between 0.7 mm and 2.1 mm. The visible light transmittance of the inner glass plate 12 may be 25%, 40%, 50%, 60%, 70%, 80%, 90%, 95%, or any other value between 25% and 95%. Specifically, the inner glass plate 12 may be, but is not limited to, a 2.1 mm-thick clear glass with a visible light transmittance of 91%.

In some embodiments, the low-emissivity coating 14 is disposed on a surface of the inner glass plate 12 facing away the outer glass plate 11, so as to reduce the emissivity of the laminated glass 10. The emissivity of the laminated glass 10 is less than or equal to 0.3, preferably less than or equal to 0.25, and more preferably less than or equal to 0.2.

Reference can be made to FIG. 4 and FIG. 5, where FIG. 4 is a first schematic structural diagram of a low-emissivity coating illustrated in FIG. 3, and FIG. 5 is a schematic second structural diagram of the low-emissivity coating illustrated in FIG. 3.

In some embodiments, the low-emissivity coating 14 includes at least one transparent conductive oxide (TCO) coating 141. According to the specific design of the low-emissivity coating 14, the low-emissivity coating 14 may have only one transparent conductive oxide coating 141, or may have two transparent conductive oxide coatings 141, or may even have three transparent conductive oxide coatings 141. Specifically, the total thickness of all the transparent conductive oxide coatings 141 ranges from 50 nm to 300 nm, so as to achieve the optimal design of the thickness of the transparent conductive oxide coatings 141. For example, the total thickness of all the transparent conductive oxide coatings 141 may be 50 nm, 90 nm, 150 nm, 200 nm, 250 nm, 300 nm, or any other value between 50 nm and 300 nm.

Optionally, a material of the at least one transparent conductive oxide coating 141 may be selected from a group consisting of doped zinc oxide (ZnO), indium tin oxide (ITO), chromium-doped nickel oxide, fluorine-doped tin oxide (FTO), zinc tin oxide (ZnSnOx), and combinations thereof. When the material of the at least one transparent conductive oxide coating 141 is doped ZnO, the doped ZnO is ZnO doped with at least one of aluminum (Al), tungsten (W), hafnium (Hf), gallium (Ga), yttrium (Y), niobium (Nb), and neodymium (Nd). Specifically, for example, the at least one transparent conductive oxide coating 141 is select from a group consisting of aluminum-doped zinc oxide (AZO), yttrium-doped zinc oxide (YZO), hafnium and aluminum-doped zinc oxide (HAZO), tungsten and aluminum-doped zinc oxide (W-AZO), gallium-doped zinc oxide (GZO), and combinations thereof.

In FIG. 4 and FIG. 5, the low-emissivity coating 14 further includes at least two first dielectric layers 142. Each transparent conductive oxide coating 141 is disposed between two adjacent first dielectric layers 142. By optimizing the design of materials and thicknesses of the aforementioned transparent conductive oxide coating 141 and the first dielectric layer 142, the low-emissivity coating 14 can withstand subsequent high-temperature heat treatment or other bending-and-forming processes, and the produced laminated glass 10 can meet standards for vehicle glass in terms of optical property, mechanical property, and other aspects. In addition, the design may be further optimized to achieve an antireflective effect of the low-emissivity coating 14, which can reduce or even eliminate the formation of obvious reflections of passengers and objects inside the vehicle 1, on the laminated glass 10, due to specular reflection, thereby reducing visual interference on passengers, and thus improving user experience. According to the specific design of the low-emissivity coating 14, the number of the first dielectric layers 142 may be 2, 3, 4, 5, or even more. Optionally, a material of the at least two first dielectric layers is selected from a group consisting of a nitride, an oxide, and an oxynitride of at least one of zinc (Zn), tin (Sn), titanium (Ti), silicon (Si), Al, magnesium (Mg), and zirconium (Zr). The transparent conductive oxide coating 141 and the first dielectric layer 142 can be respectively formed through a magnetron sputtering process.

In FIG. 5, the low-emissivity coating 143 further includes a visible light blocking layer 143. The thickness of the visible light blocking layer 143 ranges from 3 nm to 20 nm. For example, the thickness of the visible light blocking layer 143 may be, but is not limited to, 3 nm, 7 nm, 12 nm, 15 nm, 17 nm, 20 nm, or any other value between 3 nm and 20 nm. A material of the visible light blocking layer 143 may be selected from a group consisting of nickel-chromium alloy (NiCr), nickel-aluminum alloy (NiAl), nickel-silicon alloy (NiSi), metallic chromium (Cr), titanium nitride (TiN), niobium nitride (NbN), titanium-molybdenum alloy (MoTi), and combinations thereof. In this embodiment, by adding the visible light blocking layer 143 to the low-emissivity coating 14, the inner glass plate 12 provided with the low-emissivity coating 14 can have a lower visible light transmittance, which makes it possible to use clear glass or green glass with visible light transmittance greater than or equal to 80%, instead of gray glass or gray PVB with lower visible light transmittance. Such arrangement is conducive to reducing a cost of raw material for the inner glass plate 12 and to selecting a transparent thermoplastic polymer film with lower cost as the thermoplastic interlayer 13. The visible light blocking layer 143 is stacked with the transparent conductive oxide coating 141. The visible light blocking layer 143 can be disposed at one side of the transparent conductive oxide coating 141, close to the inner glass plate 12, or at one side of the transparent conductive oxide coating 141, facing away the inner glass plate 12. As illustrated in FIG. 5, the visible light blocking layer 143 is spaced apart from the transparent conductive oxide coating 141, that is, at least one first dielectric layer 142 is disposed between the visible light blocking layer 143 and the transparent conductive oxide coating 141. It may be understood that, the visible light blocking layer 143 may further be disposed in direct contact with the transparent conductive oxide coating 141. Preferably, the visible light blocking layer 143 is disposed in direct contact with the transparent conductive oxide coating 141 and is located at one side of the transparent conductive oxide coating 141 facing away the inner glass plate 12. Such arrangement can not only reduce the visible light transmittance of the inner glass plate 12 provided with the low-emissivity coating 14, but also protect the transparent conductive oxide coating 141 from damage in subsequent high-temperature heat treatment or other bending-and-forming processes.

Reference can be made to FIG. 6, where FIG. 6 is a schematic structural diagram of a laminated glass provided in another embodiment of the present disclosure. In this embodiment, the laminated glass 10 further includes an infrared reflection coating 15. The infrared reflection coating 15 is configured to reflect an infrared ray in sunlight, thereby reducing a total solar transmittance (TTS) of the laminated glass 10.

In this embodiment, the infrared reflection coating 15 is disposed between the outer glass plate 11 and the inner glass plate 12. Optionally, the infrared reflection coating 15 is disposed on a surface of the outer glass plate 11 facing towards the inner glass plate 12, that is, on an inner surface of the outer glass plate 11. Or, the infrared reflection coating 15 is disposed on a surface of the inner glass plate 12 facing towards the outer glass plate 11, that is, on an inner surface of the inner glass plate 12. Or, the infrared reflection coating 15 is disposed on the thermoplastic interlayer, that is, the infrared reflection coating 15 is deposited on an organic resin film such as polycarbonate (PC) film or polyethylene terephthalate (PET) film, and the organic resin film provided with the infrared reflection coating 15 is sandwiched between the thermoplastic interlayer and the outer glass plate 11, or between the thermoplastic interlayer and the inner glass plate 12.

Reference can be made to FIG. 7, where FIG. 7 is a schematic structural diagram of the infrared reflection coating illustrated in FIG. 6. In this embodiment, the infrared reflection coating 15 includes at least one metal layer 151 and at least two second dielectric layers 152. Each metal layer 151 is disposed between two adjacent second dielectric layers 152.

Optionally, a material of the at least one metal layer 151 is selected from a group consisting of silver (Ag), aurum (Au), copper (Cu), aluminum (Al), platinum (Pt), and alloys thereof. Preferably, the material of the at least one metal layer 151 is silver or a silver alloy. When the material of the at least one metal layer 151 is a silver alloy, the material of the at least one metal layer 151 is preferably an alloy of silver and at least one of aurum (Au), aluminum (Al), copper (Cu), and platinum (Pt). It may be noted that, according to the specific design of infrared reflection coating 15, the number of the metal layers 151 may be, but is not limited to, 1, 2, 3, 4, 5, or more than 5. For example, when the material of the at least one metal layer 151 is silver or the silver alloy, the infrared reflection coating 15 may be, but is not limited to, a double-silver infrared reflection coating, a triple-silver infrared reflection coating, a quadruple-silver infrared reflection coating, a quintuple-silver infrared reflection coating, or the like.

According to the specific design of the infrared reflection coating 15, the number of the second dielectric layers 152 may be 2, 5, 8, 10 and even more. Optionally, a material of the at least two second dielectric layers is selected from a group consisting of oxides of zinc (Zn), magnesium (Mg), tin (Sn), titanium (Ti), niobium (Nb), zirconium (Zr), nickel (Ni), indium (In), Al, cerium (Ce), tungsten (W), molybdenum (Mo), antimony (Sb), and bismuth (Bi), or includes at least one material selected from a group consisting of nitrides, oxynitrides, and mixtures thereof of silicon (Si), Al, zirconium (Zr), yttrium (Y), Ce, and lanthanum (La). For example, the material of the at least two second dielectric layers 152 may be, but is not limited to, zinc stannate ($ZnSnO_x$), magnesium-doped zinc stannate, zinc oxide, magnesium-doped zinc oxide, zirconium-doped zinc oxide, niobium oxide, bismuth oxide, aluminum-doped zinc oxide (AZO), zirconium oxide, titanium oxide, titanium peroxide, or the like.

Optionally, the metal layer 151 and the second dielectric layer 152 are respectively formed through the magnetron sputtering process.

Optionally, the infrared reflection coating 15 may also be provided with at least one visible light blocking layer (not illustrated in accompanying drawings). The thickness of the at least one visible light blocking layer ranges from 3 nm to 20 nm. For example, the thickness of the at least one visible light blocking layer may be, but is not limited to, 3 nm, 7 nm, 12 nm, 15 nm, 17 nm, 20 nm, or any other value between 3 nm and 20 nm. A material of the at least one visible light blocking layer may be selected from a group consisting of nickel-chromium alloy (NiCr), nickel-aluminum alloy (NiAl), nickel-silicon alloy (NiSi), metallic chromium (Cr), titanium nitride (TiN), niobium nitride (NbN), titanium-molybdenum alloy (MoTi), and combinations of. In this embodiment, by adding the visible light blocking layer to the infrared reflection coating 15, the laminated glass 10 provided with the infrared reflection coating 15 can have a lower visible light transmittance, so that transparent PVB can be used to replace gray PVB, which is beneficial to reducing the manufacturing cost of the laminated glass 10.

Optionally, the thickness of each metal layer 151 can be set to range from 4 nm to 20 nm, so that the optimal design of thicknesses of the metal layer 151 and the second dielectric layer 152 can be achieved. In addition, by optimizing the design of the materials of the metal layer 151 and the second dielectric layer 152, the infrared reflection coating 15 can withstand subsequent high-temperature heat treatment or other bending-and-forming processes, and the produced laminated glass 10 can meet standards for vehicle glass in terms of optical property, mechanical property, and other aspects.

In the laminated glass 10 corresponding to the embodiments illustrated in FIG. 6 and FIG. 7, the outer glass plate 11 is preferably the clear glass or the ultra-clear glass, with the thickness of 1.6 mm to 4 mm and the visible light transmittance ranging from 80% to 95%. A total iron content of the clear glass is less than or equal to 0.1%, and its visible light transmittance is greater than or equal to 80%. A total iron content of the ultra-clear glass is less than or equal to 0.015%, and its visible light transmittance is greater than or equal to 90%. By selecting clear glass or ultra-clear glass with low total iron content, the absorption of infrared rays by the outer glass plate 11 can be reduced, the infrared reflection effect of the laminated glass 10 can be further improved, which is beneficial to further reducing the total solar transmittance of the laminated glass 10 and achieving a more excellent heat insulation effect. For example, the thickness of the outer glass plate 11 can be, but is not limited to, 1.6 mm, 2.0 mm, 2.4 mm, 2.8 mm, 3.2 mm, 3.6 mm, 4 mm, or any other value between 1.6 mm and 4 mm. The visible light transmittance of the outer glass plate 11 can be, but is not limited to, 88%, 89%, 90%, 91%, 92%, 93%, or any other value between 80% and 95%. Specifically, the outer glass plate 11 can be, but is not limited to, a 2.1 mm-thick ultra-clear glass with a visible light transmittance of 91%, or the like.

Embodiments 1 to 24 and Comparative Embodiments 1 to 4

A comparative experiment was conducted between the laminated glass 10 in the aforementioned embodiments and the laminated glass 10 in the comparative embodiments, to compare three indicators of visible light transmittance, chromaticity difference, and visual index of the laminated glass 10. In the following embodiments and comparative embodiments, white glass refers to clear glass, green glass refers to green-colored glass, gray glass refers to gray-colored glass, indium tin oxide (ITO) coating refers to a low-emissivity coating containing at least one ITO layer, double-silver coating refers to an infrared reflection coating containing two silver layers, and triple-silver coating refers to an infrared reflection coating containing three silver layers.

Visible Light Transmittance (*TL*): Measure and calculate the visible light transmittance within a wavelength ranges from 380 nm to 780 nm according to ISO 9050.

Transmitted Color Lab: Measure transmitted colors *L1, a1,* and *b1* of the laminated glass according to CIE Lab color model. *L1* is a lightness value, *a1* is a red-green chromaticity value, and *b1* is a yellow-blue chromaticity value.

Reflected Color Lab: Measure reflected colors *L2, a2,* and *b2* of the laminated glass from a side at the outer surface of the outer glass plate according to CIE Lab color model. *L2* is a lightness value, *a2* is a red-green chromaticity value, and *b2* is a yellow-blue chromaticity value.

Chromaticity Difference (*Δab*): Calculate the chromaticity difference according to formula:

$$\Delta ab = \sqrt{(a1 - a2)^2 + (b1 - b2)^2} \ .$$

Visual Index (*S*): Calculate the visual index according to formula:

$$S = \sqrt{L1^2 + a1^2 + b1^2} / \sqrt{L2^2 + a2^2 + b2^2} \ .$$

In the first group of product experiments, comparative experiments were conducted between Comparative Embodiments 1 to 2 and Embodiments 1 to 11. Parameters of Comparative Embodiments 1 to 2 and Embodiments 1 to 11 are illustrated in Table 1, and measurement results of Comparative Embodiments 1 to 2 and Embodiments 1 to 11 are illustrated in Table 2.

Table 1: Parameters of Laminated Glasses 10 in Comparative Embodiments 1 to 2 and Embodiments 1 to 11

|  | Outer Glass Plate | Infrared Reflection Coating | Thermoplastic Interlayer | Inner Glass Plate | Low-emissivity Coating |
|---|---|---|---|---|---|
| Comparative Embodiment 1 | 2.1 mm-thick White Glass | No | Transparent PVB | 2.1 mm-thick White Glass | No |
| Comparative Embodiment 2 | 2.1 mm-thick Green Glass | No | 5.4% Gray PVB | 2.1 mm-thick Green Glass | ITO Coating |
| Embodiment 1 | 2.1 mm-thick Green Glass | No | 2.4% Gray PVB | 2.1 mm-thick White Glass | ITO Coating |
| Embodiment 2 | 2.1 mm-thick Green Glass | No | 2.4% Gray PVB | 2.1 mm-thick Green Glass | ITO Coating |
| Embodiment 3 | 1.6 mm-thick Gray Glass | No | 8% Gray PVB | 1.6 mm-thick Grav Glass | ITO Coating |
| Embodiment 4 | 1.6 mm-thick Gray Glass | No | 18.4% Gray PVB | 1.6 mm-thick Gray Glass | ITO Coating |
| Embodiment 5 | 2.1 mm-thick Gray Glass | No | 18.4% Gray PVB | 2.1 mm-thick Grav Glass | ITO Coating |
| Embodiment 6 | 2.1 mm-thick Gray Glass | No | 44% Gray PVB | 2.1 mm-thick Gray Glass | ITO Coating |
| Embodiment 7 | 2.1 mm-thick Green Glass | No | 6% Gray PVB | 2.1 mm-thick White Glass | ITO Coating |
| Embodiment 8 | 2.1 mm-thick Green Glass | No | 2.9% Gray PVB | 2.1 mm-thick Green Glass | ITO Coating |
| Embodiment 9 | 2.1 mm-thick green glass | No | 8% Gray PVB | 2.1 mm-thick White Glass | ITO Coating |

(continued)

|  | Outer Glass Plate | Infrared Reflection Coating | Thermoplastic Interlayer | Inner Glass Plate | Low-emissivity Coating |
|---|---|---|---|---|---|
| Embodiment 10 | 2.1 mm-thick Green Glass | No | 5.4% Gray PVB | 2.1 mm-thick White Glass | ITO Coating |
| Embodiment 11 | 2.1 mm-thick Green Glass | No | 8% Gray PVB | 2.1 mm-thick Green Glass | ITO Coating |

Table 2: Measurement Results of Laminated Glasses 10 in Comparative Embodiments 1 to 2 and Embodiments 1 to 11

|  | Visible Light Transmittance ($TL$) | Transmitted Color Lab | | | Reflected Color Lab | | | Chromaticity Difference ($\Delta ab$) | Visual Index ($S$) |
|---|---|---|---|---|---|---|---|---|---|
|  |  | $L1$ | $a1$ | $b1$ | $L2$ | $a2$ | $b2$ |  |  |
| Comparative Embodiment 1 | 85.4% | 93.96 | -0.52 | 3.09 | 37.99 | -1.10 | 0.60 | 2.56 | 0.40 |
| Comparative Embodiment 2 | 4.39% | 24.91 | -6.65 | 4.90 | 23.69 | -3.28 | -13.14 | 18.35 | 1.20 |
| Embodiment 1 | 1.54% | 12.80 | -1.18 | 0.87 | 26.81 | 0.05 | -1.13 | 2.35 | 2.05 |
| Embodiment 2 | 1.41% | 11.98 | -2.02 | 1.26 | 26.77 | 0.11 | -1.20 | 3.25 | 2.09 |
| Embodiment 3 | 1.81% | 14.32 | -1.60 | 3.22 | 26.80 | -0.12 | -1.06 | 4.53 | 1.68 |
| Embodiment 4 | 4.36% | 24.73 | -2.78 | 4.47 | 25.08 | -0.12 | -0.61 | 5.73 | 0.93 |
| Embodiment 5 | 2.04% | 15.58 | -4.45 | 3.59 | 26.50 | -0.07 | -1.27 | 6.54 | 1.38 |
| Embodiment 6 | 4.6% | 25.45 | -2.93 | 1.43 | 19.09 | -3.82 | -6.37 | 7.85 | 0.92 |
| Embodiment 7 | 4.01% | 23.63 | -2.01 | 1.48 | 27.63 | -3.86 | -6.52 | 8.21 | 1.30 |
| Embodiment 9 | 2.13% | 16.13 | -6.77 | 4.66 | 26.75 | 0.02 | -0.94 | 8.80 | 1.16 |
| Embodiment 9 | 7.66% | 33.22 | -3.02 | 1.98 | 26.62 | -3.45 | -7.30 | 9.29 | 0.92 |
| Embodiment 10 | 4.79% | 26.13 | -5.34 | 4.32 | 24.77 | -5.73 | -5.53 | 9.86 | 0.998 |
| Embodiment 11 | 7.06% | 31.88 | -4.20 | 2.69 | 24.76 | -4.18 | -12.19 | 14.88 | 1.07 |

It can be seen from Table 1 and Table 2 that, Comparative Embodiment 1 adopts a traditional combination of ordinary laminated glasses, that is, a combination of two pieces of clear glass (white glass) and one piece of transparent PVB. The chromaticity difference between colors of the laminated glass in Comparative Embodiment 1, observed from inside and outside the vehicle, is very small, resulting in color consistency between inside and outside, thereby having excellent chromaticity difference $\Delta ab$ and visual index S. However, Comparative Embodiment 1 cannot meet usage requirements of sunroof glass and side window glass with low visible light transmittance and low-emissivity property. The laminated glass in Comparative Embodiment 2 has a low visible light transmittance and a low-emissivity property, but its

chromaticity difference $\Delta ab$ is greater than 18. Therefore, the chromaticity difference between colors of the laminated glass in Comparative Embodiment 2, observed from inside and outside the vehicle, is relatively large, resulting in color inconsistency between inside and outside.

The laminated glasses 10 in Embodiments 1 to 11 satisfy the following. A visible light transmittance $TL$ ranges from 1% to 8%, a chromaticity difference $\Delta ab$ ranges from 2 to 15, and a visual index S ranges from 0.8 to 2.5. In some embodiments, the chromaticity difference $\Delta ab$ of the laminated glasses 10 ranges from 2 to 10, and the visual index S ranges from 0.8 to 2. It can be concluded that, the laminated glasses 10 in Embodiments 1 to 11 provided in the present disclosure also have very small chromaticity differences between colors of the laminated glasses 10 in Embodiments 1 to 11, observed from inside and outside the vehicle, while having low visible light transmittance and low-emissivity property, resulting in color consistency between inside and outside, and great visual comfort.

In the second group of product experiments, experiments were conducted on Embodiment 12 and Embodiment 13. Parameters of Embodiment 12 and Embodiment 13 are illustrated in Table 3, and measurement results of Embodiment 12 and Embodiment 13 are illustrated in Table 4.

Table 3: Parameters of Laminated Glasses 10 in Embodiment 12 and Embodiment 13

|  | Outer Glass Plate | Infrared Reflection Coating | Thermoplastic Interlayer | Inner Glass Plate | Low-emissivity Coating |
|---|---|---|---|---|---|
| Embodiment 12 | 1.6 mm-thick Gray Glass | No | 0.76 mm-thick Transparent PVB | 1.6 mm-thick Gray Glass | ITO Coating |
| Embodiment 13 | 1.6 mm-thick Green Glass | No | 18.4% Gray PVB | 1.6 mm-thick Green Glass | ITO Coating |

Table 4: Measurement Results of Laminated Glasses 10 in Embodiment 12 and Embodiment 13

|  | Visible Light Transmittance ($TL$) | Transmitted Color Lab | | | Reflected Color Lab | | | Chromaticity Difference ($\Delta ab$) | Visual Index (S) |
|---|---|---|---|---|---|---|---|---|---|
|  |  | L1 | a1 | b1 | L2 | a2 | b2 |  |  |
| Embodiment 12 | 21.99% | 53.65 | -1.82 | 5.97 | 28.03 | -0.06 | -1.43 | 7.61 | 0.51 |
| Embodiment 13 | 14.92% | 45.51 | -6.02 | 4.72 | 27.40 | -0.33 | -2.44 | 9.15 | 0.58 |

It can be seen from Table 3 and Table 4 that, a visible light transmittance $TL$ of the laminated glass 10 ranges from 8% to 25%, a chromaticity difference $\Delta ab$ of the laminated glass 10 ranges from 6 to 10, and a visual index S of the laminated glass 10 ranges from 0.5 to 0.9. It can be concluded that, the laminated glasses 10 in Embodiments 12 and 13 provided in the present disclosure also have very small chromaticity differences between colors of the laminated glass in Embodiments 12 to 13, observed from inside and outside the vehicle, while having low visible light transmittance and low-emissivity property, resulting in color consistency between inside and outside, and great visual comfort.

In the third group of product experiments, comparative experiments were conducted between Comparative Embodiments 3 to 4 and Embodiments 14 to 24. Parameters of Comparative Embodiments 3 to 4 and Embodiments 14 to 24 are illustrated in Table 5, and measurement results are illustrated in Table 6.

Table 5: Parameters of Laminated Glasses 10 in Comparative Embodiments 3 to 4 and Embodiments 14 to 24

|  | Outer Glass Plate | Infrared Reflection Coating | Thermoplastic Interlayer | Inner Glass Plate | Low-emissivity Coating |
|---|---|---|---|---|---|
| Comparative Embodiment 3 | 2.1 mm-thick White Glass | Double-silver Coating | 2.4% Gray PVB | 2.1 mm-thick Green Glass | ITO Coating |
| Comparative Embodiment 4 | 2.1 mm-thick White Glass | Double-silver Coating | 2.4% Gray PVB | 2.1 mm-thick White Glass | ITO Coating |
| Embodiment 14 | 2.1 mm-thick White Glass | Triple-silver Coating | 8% Gray PVB | 2.1 mm-thick White Glass | ITO Coating |
| Embodiment 15 | 2.1 mm-thick White Glass | Triple-silver Coating | 5.4% Gray PVB | 2.1 mm-thick White Glass | ITO Coating |

(continued)

| | Outer Glass Plate | Infrared Reflection Coating | Thermoplastic Interlayer | Inner Glass Plate | Low-emissivity Coating |
|---|---|---|---|---|---|
| Embodiment 16 | 2.1 mm-thick White Glass | Double-silver Coating | 6% Gray PVB | 2.1 mm-thick White Glass | ITO Coating |
| Embodiment 17 | 2.1 mm-thick White Glass | Double-silver Coating | 8% Gray PVB | 2.1 mm-thick White Glass | ITO Coating |
| Embodiment 18 | 2.1 mm-thick White Glass | Double-silver Coating | 5.4% Gray PVB | 2.1 mm-thick White Glass | ITO Coating |
| Embodiment 19 | 2.1 mm-thick White Glass | Triple-silver Coating | 8% Gray PVB | 2.1 mm-thick Green Glass | ITO Coating |
| Embodiment 20 | 2.1 mm-thick White Glass | Double-silver Coating | 8% Gray PVB | 2.1 mm-thick Green Glass | ITO Coating |
| Embodiment 21 | 2.1 mm-thick White Glass | Double-silver Coating | 6% Gray PVB | 2.1 mm-thick Green Glass | ITO Coating |
| Embodiment 22 | 2.1 mm-thick White Glass | Double-silver Coating | 5.4% Gray PVB | 2.1 mm-thick Green Glass | ITO Coating |
| Embodiment 23 | 2.1 mm-thick White Glass | Triple-silver coating | 5.4% Gray PVB | 2.1 mm-thick Green Glass | ITO Coating |
| Embodiment 24 | 2.1 mm-thick White Glass | Triple-silver Coating | 2.9% Gray PVB | 2.1 mm-thick Green Glass | ITO Coating |

Table 6: Measurement Results of Laminated Glasses 10 in Comparative Embodiments 3 to 4 and Embodiments 14 to 24

| | Visible Light Transmittance (TL) | Transmitted Color Lab | | | Reflected Color Lab | | | Chromaticity Difference ($\Delta ab$) | Visual Index (S) |
|---|---|---|---|---|---|---|---|---|---|
| | | L1 | a1 | b1 | L2 | a2 | b2 | | |
| Comparative Embodiment 3 | 1.48% | 12.41 | -1.66 | 2.65 | 37.67 | -1.32 | -15.18 | 17.83 | 3.49 |
| Comparative Embodiment 4 | 1.69% | 13.71 | -0.82 | 2.35 | 35.82 | -1.50 | -15.61 | 17.97 | 3.26 |
| Embodiment 14 | 7.12% | 32.08 | -1.94 | 0.99 | 26.24 | -6.63 | -3.17 | 6.2691 | 0.93 |
| Embodiment 15 | 4.85% | 26.37 | -5.06 | 3.54 | 25.31 | -6.30 | -4.47 | 8.1054 | 1.02 |
| Embodiment 16 | 3.73% | 22.64 | -1.02 | 2.43 | 25.54 | -5.40 | -5.85 | 9.3671 | 1.29 |
| Embodiment 17 | 7.35% | 32.49 | -1.69 | 3.11 | 26.84 | -3.64 | -7.14 | 10.4338 | 0.94 |
| Embodiment 18 | 4.22% | 24.37 | -4.03 | 5.26 | 25.42 | -5.76 | -5.93 | 11.3229 | 1.09 |
| Embodiment 19 | 6.37% | 30.33 | -3.57 | 1.78 | 23.95 | -2.61 | -13.05 | 14.8610 | 1.14 |
| Embodiment 20 | 6.84% | 31.33 | -3.06 | 3.82 | 24.79 | -4.44 | -11.55 | 15.4318 | 1.07 |

(continued)

|  | Visible Light Transmittance (TL) | Transmitted Color Lab | | | Reflected Color Lab | | | Chromaticity Difference (⊿ab) | Visual Index (S) |
|---|---|---|---|---|---|---|---|---|---|
|  |  | L1 | a1 | b1 | L2 | a2 | b2 |  |  |
| Embodiment 21 | 3.48% | 21.77 | -2.42 | 2.63 | 24.50 | -2.60 | -13.69 | 16.3210 | 1.62 |
| Embodiment 22 | 4.11% | 23.99 | -5.34 | 5.56 | 23.65 | -6.21 | -11.01 | 16.5928 | 1.21 |
| Embodiment 23 | 4.61% | 25.64 | -6.23 | 4.36 | 23.85 | -3.20 | -12.64 | 17.2679 | 1.19 |
| Embodiment 24 | 2.05% | 15.78 | -5.93 | 4.40 | 38.71 | 0.19 | -12.18 | 17.6734 | 2.12 |

It can be seen from Table 5 and Table 6 that, although a chromaticity difference ⊿ab between Comparative Embodiment 3 and Comparative Embodiment 4 is less than 18, a visual index S of Comparative Embodiment 3 and a visual index S of Comparative Embodiment 4 are both greater than 3, thereby having a disadvantage of poor visual comfort.

The laminated glasses 10 in Embodiments 14 to 24 satisfy the following. A visible light transmittance TL ranges from 1% to 8%, a chromaticity difference ⊿ab ranges from 6 to 18, and a visual index S ranges from 0.8 to 2.5. In some embodiments, the chromaticity difference ⊿ab of the laminated glasses 10 ranges from 6 to 15, and the visual index S ranges from 0.8 to 1.5. It can be concluded that, the laminated glasses 10 in Embodiments 14 to 24 provided in the present disclosure, also have very small chromaticity differences between colors of the laminated glass in Embodiments 14 to 24, observed from inside and outside the vehicle, while having low visible light transmittance, low total solar transmittance, and low-emissivity property, resulting color consistency between inside and outside, and great visual comfort.

While the embodiments of the present disclosure have been illustrated and described, it may be understood that the above embodiments are illustrative and cannot be construed as limitations to the present disclosure. Within the scope of the present disclosure, those of ordinary skill in the art can make changes, modifications, equivalent replacements, and variations to the above embodiments, and these improvements and modifications shall also be covered within the protection scope of the present disclosure.

**Claims**

1.   A laminated glass, comprising:

an outer glass plate;
an inner glass plate;
a thermoplastic interlayer disposed between the outer glass plate and the inner glass plate; and
a low-emissivity coating disposed on a surface of the inner glass plate facing away the outer glass plate;
wherein a visible light transmittance of the laminated glass ranges from 1% to 25%, a chromaticity difference of the laminated glass ranges from 2 to 18, and a visual index ranges from 0.5 to 2.5.

2.   The laminated glass of claim 1, wherein a visible light reflectivity of the laminated glass at a side where the low-emissivity coating is located is less than or equal to 6%.

3.   The laminated glass of claim 1, wherein an emissivity of the laminated glass at a side where the low-emissivity coating is located is less than or equal to 0.3, or less than or equal to 0.25, or less than or equal to 0.2.

4.   The laminated glass of claim 1, wherein the low-emissivity coating comprises at least one transparent conductive oxide coating, a material of the at least one transparent conductive oxide coating is selected from a group consisting of doped zinc oxide (ZnO), indium tin oxide (ITO), chromium-doped nickel oxide, fluorine-doped tin oxide (FTO), zinc tin oxide (ZnSnOx), and combinations thereof, and doped ZnO is ZnO doped with at least one of aluminum (Al), tungsten (W), hafnium (Hf), gallium (Ga), yttrium (Y), niobium (Nb), and neodymium (Nd).

5.   The laminated glass of claim 4, wherein a total thickness of all transparent conductive oxide coatings ranges from 50 nm to 300 nm.

6. The laminated glass of claim 4, wherein the low-emissivity coating further comprises at least two first dielectric layers, each transparent conductive oxide coating is disposed between two adjacent first dielectric layers, and a material of the at least two first dielectric layers is selected from a group consisting of a nitride, an oxide, and an oxynitride of at least one of zinc (Zn), tin (Sn), titanium (Ti), silicon (Si), Al, magnesium (Mg), and zirconium (Zr).

7. The laminated glass of claim 1, further comprising:
an infrared reflection coating, wherein the infrared reflection coating is disposed on a surface of the outer glass plate facing towards the inner glass plate, or on a surface of the inner glass plate facing towards the outer glass plate, or at the thermoplastic interlayer layer.

8. The laminated glass of claim 7, wherein the infrared reflection coating further comprises at least one metal layer and at least two second dielectric layers, each metal layer is disposed between two adjacent second dielectric layers; a material of the at least one metal layer is selected from a group consisting of silver (Ag), aurum (Au), copper (Cu), aluminum (Al), platinum (Pt), and alloys thereof; a thickness of each metal layer ranges from 4 nm to 20 nm, and a material of the at least two second dielectric layers is selected from a group consisting of oxides of zinc (Zn), magnesium (Mg), tin (Sn), titanium (Ti), niobium (Nb), zirconium (Zr), nickel (Ni), indium (In), Al, cerium (Ce), tungsten (W), molybdenum (Mo), antimony (Sb), and bismuth (Bi), or comprises at least one material selected from a group consisting of nitrides, oxynitrides, and mixtures thereof of silicon (Si), Al, zirconium (Zr), yttrium (Y), Ce, and lanthanum (La).

9. The laminated glass of claim 6 or 8, wherein the low-emissivity coating further comprises a visible light blocking layer, and/or, when the laminated glass further comprises an infrared reflection coating, the infrared reflection coating further comprises the visible light blocking layer; and
a material of the visible light blocking layer is selected from a group consisting of nickel-chromium alloy (NiCr), nickel-aluminum alloy (NiAl), nickel-silicon alloy (NiSi), metallic chromium (Cr), titanium nitride (TiN), niobium nitride (NbN), titanium-molybdenum alloy (MoTi), and combinations thereof, and a thickness of the visible light blocking layer ranges from 3 nm to 20 nm.

10. The laminated glass of claim 1, wherein the thermoplastic interlayer is a transparent thermoplastic polymer film or a tinted thermoplastic polymer film, a visible light transmittance of the transparent thermoplastic polymer film is greater than or equal to 80%, and a visible light transmittance of the tinted thermoplastic polymer film ranges from 1% to 45%.

11. The laminated glass of claim 1, wherein the inner glass plate is a clear glass or a tinted glass, a thickness of the inner glass plate ranges from 0.7 mm to 2.1 mm, and a visible light transmittance of the inner glass plate ranges from 25% to 95%.

12. The laminated glass of claim 1, wherein the outer glass plate is a tinted glass, and a visible light transmittance of the outer glass plate ranges from 10% to 85%.

13. The laminated glass of claim 7 or 8, wherein the outer glass plate is a clear glass or an ultra-clear glass, a total iron content of the clear glass is less than or equal to 0.1%, a total iron content of the ultra-clear glass is less than or equal to 0.015%, and a visible light transmittance of the outer glass plate ranges from 80% to 95%.

14. The laminated glass of claim 12, wherein the visible light transmittance of the laminated glass ranges from 1% to 8%, the chromaticity difference of the laminated glass ranges from 2 to 15, and the visual index ranges from 0.8 to 2.5.

15. The laminated glass of claim 12, wherein the visible light transmittance of the laminated glass ranges from 8% to 25%, the chromaticity difference of the laminated glass ranges from 6 to 10, and the visual index ranges from 0.5 to 0.9.

16. The laminated glass of claim 13, wherein the visible light transmittance of the laminated glass ranges from 1% to 8%, the chromaticity difference of the laminated glass ranges from 6 to 18, and the visual index ranges from 0.8 to 2.5.

17. A vehicle, comprising:

a vehicle body; and
the laminated glass of any one of claims 1 to 16, wherein the laminated glass is mounted on the vehicle body.

FIG. 1

FIG. 2

10

11
13
12
14

FIG. 3

14

142
141
142

FIG. 4

14

143
142
141
142

FIG. 5

10

11
15
13
12
14

FIG. 6

15

152
151
152

FIG. 7

## INTERNATIONAL SEARCH REPORT

| International application No. |
|---|
| **PCT/CN2024/112566** |

| **A.** | **CLASSIFICATION OF SUBJECT MATTER** |
|---|---|

B32B17/10(2006.01)i; B32B27/30(2006.01)i; B32B27/36(2006.01)i; B32B33/00(2006.01)i; B60J7/00(2006.01)i; C03C17/245(2006.01)i; C03C17/34(2006.01)i; C03C17/36(2006.01)i

According to International Patent Classification (IPC) or to both national classification and IPC

| **B.** | **FIELDS SEARCHED** |
|---|---|

Minimum documentation searched (classification system followed by classification symbols)

IPC: B32B B60J C03C

Documentation searched other than minimum documentation to the extent that such documents are included in the fields searched

Electronic data base consulted during the international search (name of data base and, where practicable, search terms used)

CNABS; VEN; CNKI; CNTXT; USTXT; WOTXT; EPTXT; WPABS; CJFD; ISI Web of Knowledge: 夹层, 夹胶, 玻璃, 热塑, 内, 外, 中间层, 粘结层, 低辐射, 介质层, 透明导电氧化物, 金属, 红外, 可见光透过, 低透, 色差, 色度差, 视觉指数, 反射率, Lab, TCO, laminat+, glass, outer, inner, low-radiation, chromaticity difference, visual index, infrared reflecting, metal

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 117183494 A (FUYAO GLASS INDUSTRY GROUP CO., LTD.) 08 December 2023 (2023-12-08)<br>claims 1-17 | 1-17 |
| PX | CN 117303749 A (FUJIAN WANDA AUTOMOBILE GLASS INDUSTRY CO., LTD.) 29 December 2023 (2023-12-29)<br>description, paragraphs 0046-0085 | 1-17 |
| PX | WO 2024109924 A1 (FUYAO GLASS INDUSTRY GROUP CO., LTD.) 30 May 2024 (2024-05-30)<br>description, page 1 line 24-page 6 line 30 | 1-17 |
| PX | WO 2024109864 A1 (FUYAO GLASS INDUSTRY GROUP CO., LTD.) 30 May 2024 (2024-05-30)<br>description, page 1 line 20-page 4 line 5 | 1-17 |
| X | CN 115923458 A (FUYAO GLASS INDUSTRY GROUP CO., LTD.) 07 April 2023 (2023-04-07)<br>description, paragraphs 0029, 0053-0058, and 0063 | 1-17 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 November 2024** | **25 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/112566** |

### C. DOCUMENTS CONSIDERED TO BE RELEVANT

| Category* | Citation of document, with indication, where appropriate, of the relevant passages | Relevant to claim No. |
|---|---|---|
| X | CN 116395985 A (FUYAO GLASS INDUSTRY GROUP CO., LTD.) 07 July 2023 (2023-07-07) description, paragraphs 0005-0049 | 1-17 |
| X | CN 115847956 A (FUYAO GLASS INDUSTRY GROUP CO., LTD.) 28 March 2023 (2023-03-28) description, paragraphs 0004-0023 | 1-17 |
| A | WO 2021075294 A1 (AGC INC.) 22 April 2021 (2021-04-22) description, paragraphs 0014-0103 | 1-17 |

**INTERNATIONAL SEARCH REPORT**
**Information on patent family members**

International application No.

**PCT/CN2024/112566**

| Patent document cited in search report | | | Publication date (day/month/year) | Patent family member(s) | | | Publication date (day/month/year) |
|---|---|---|---|---|---|---|---|
| CN | 117183494 | A | 08 December 2023 | None | | | |
| CN | 117303749 | A | 29 December 2023 | None | | | |
| WO | 2024109924 | A1 | 30 May 2024 | None | | | |
| WO | 2024109864 | A1 | 30 May 2024 | None | | | |
| CN | 115923458 | A | 07 April 2023 | None | | | |
| CN | 116395985 | A | 07 July 2023 | CN | 116395985 | B | 17 September 2024 |
| CN | 115847956 | A | 28 March 2023 | None | | | |
| WO | 2021075294 | A1 | 22 April 2021 | DE | 112020004198 | T5 | 19 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311037786X